# EUROPÄISCHE PATENTANMELDUNG

(11) **EP 4 644 334 A1**
(43) Veröffentlichungstag der Anmeldung: **05.11.2025**
(21) Anmeldenummer: 24173493.8
(22) Anmeldetag: 30.04.2024
(51) Int. Cl.: C02F 1/44, B01D 61/14, B01D 61/16, C02F 1/46, C02F 101/20

(54) **VERFAHREN ZUM ENTFERNEN VON EISEN(II) UND/ODER MANGAN(II)**

(71) Anmelder: ionOXess GmbH, 6020 Innsbruck (AT); SFC Umwelttechnik GmbH, 5020 Salzburg (AT)
(72) Erfinder: Jabornig, Simon, 5020 Salzburg (AT); Rupprich, Marco, 6020 Innsbruck (AT); Obholzer, Thomas, 6020 Innsbruck (AT)
(74) Vertreter: Schwarz & Partner Patentanwälte GmbH

(57) **Zusammenfassung**

Verfahren zum Entfernen von Eisen(II) und/oder Mangan(II) aus mit Eisen(II) und/oder Mangan(II) verunreinigtem Wasser, wobei Eisen(II) zu Eisen(III)-oxid und Mangan(II) zu Mangan(IV)-oxid oxidiert werden (2, 5), wobei anschließend Eisen(III)-oxid und/oder Mangan(IV)-oxid abfiltriert werden (3, 9), wobei zur Oxidation von Eisen(II) zu Eisen(III)-oxid und Mangan(II) zu Mangan(IV)-oxid in das mit Eisen(II) und/oder Mangan(II) verunreinigte Wasser nichtthermisches Plasma (NTP) eingeleitet wird.

## Beschreibung

Die vorliegende Erfindung betrifft ein Verfahren zum Entfernen von Eisen(II) und/oder Mangan(II) aus mit Eisen(II) und/oder Mangan(II) verunreinigtem Wasser, wobei Eisen(II) zu Eisen(III)-oxid und Mangan(II) zu Mangan(IV)-oxid oxidiert werden, wobei anschließend Eisen(III)-oxid und/oder Mangan(IV)-oxid entfernt werden. Die Erfindung betrifft weiters eine Vorrichtung zur Durchführung des Verfahrens.

### HINTERGRUND DER ERFINDUNG

Eisen und Mangan sind zwei Metalle, die in ionischer Form in Wasserquellen in der Natur vorkommen können. In sauerstoffarmen Wasser liegen Eisen und Mangan zweiwertig (als Eisen(II) und Mangan(II)) in gelöster Form vor. Beim Wassertransport in Wasserleitungen können im Wasser vorhandene Eisen- und Manganionen schwerwiegende technische und qualitative Probleme auslösen. Wird das Wasser z.B. mit Sauerstoff angereichert, bilden sich unlösliche Mangan(IV)- und Eisen(III)-Oxide. Diese bilden rotbraune (Eisen) beziehungsweise schwarze (Mangan) Niederschläge, welche zu einer Trübung und Färbung des Wassers und Ablagerungen in Rohrleitungen führen können.

Das Vorhandensein von Eisen- und Manganionen in Wasser kann zu einer Beeinträchtigung der Wasserqualität führen, da die Ionen eine dunkle Färbung bewirken und dem Wasser einen unangenehmen metallischen Geschmack verleihen können, sodass es für den Konsum und bestimmte Anwendungen, wie z.B. dem Waschen von Kleidung, ungeeignet wird.

Weiters können sich an bereits gebildeten Ablagerungen aus Mangan(IV)- und Eisen(III)-Oxiden verstärkt Mangan- und Eisenbakterien ansiedeln. Die sich so bildenden Biofilme sind nicht nur schwierig zu entfernen, sondern sie können auch einen Nährboden für weitere Bakterien - einschließlich solcher, die gesundheitliche Probleme verursachen können - bilden.

In technischer Hinsicht führen verstärkte Ablagerungen von Mangan(IV)- und Eisen(III)-Oxiden dazu, dass sich der Innendurchmesser von Rohrleitungen verringert, wodurch abschnittsweise ein unerwünschter Druckverlust im Rohrnetz auftreten kann.

Schließlich können derartige Ablagerungen die Korrosion von Rohrleitungen begünstigen. Wenngleich Eisen- und Manganionen selbst in der Regel keine unmittelbare Korrosion verursachen, können die durch diese Ionen verursachten Ablagerungen eine korrosive Umgebung fördern. Auf diese Weise kann die Lebensdauer der Rohrleitungen verkürzt werden und es kann zur Bildung von Lecks oder Brüchen kommen.

Im Ergebnis ist es daher das Ziel, die Konzentration von Eisen und Mangan in Rohrleitungen möglichst unter den Indikatorparameterwerten der Trinkwasserverordnung zu halten, indem diese Metalle aus dem Wasser entfernt werden. Die Indikatorparameterwerte laut Trinkwasserverordnung (TWV 304/2001) liegen für Eisen bei ≤ 0,2 mg·L⁻¹ und für Mangan bei ≤ 0,05 mg·L⁻¹.

Nach Stand der Technik erfordert die Entfernung von Eisen und Mangan aus dem Wasserversorgungssystem spezielle Behandlungsprozesse. Dazu gehören Filtration, chemische Oxidation und Ionenaustausch. Diese Prozesse können komplex und kostenintensiv sein, besonders in Bereichen, in denen die Konzentrationen dieser Metalle besonders hoch sind.

Ionenaustausch ist eine an sich bewährte Möglichkeit der Entfernung unerwünschter Ionen, hat allerdings den Nachteil, dass Ionenaustauschmaterialien - neben hohen Anschaffungskosten - regelmäßig regeneriert werden müssen, was auch den Dauerbetrieb erschwert. Damit scheidet Ionenaustausch für zahlreiche Anwendungsgebiete aus.

Das am häufigsten eingesetzte Verfahren zu Entfernung von Eisen und Mangan aus verunreinigtem Wasser beruht auf oxidativen Vorgängen, wie der Oxidation der Metallionen mit biologischen Verfahren, chemischen Oxidationsmitteln, Ozon oder mittels AOP (Advanced Oxidation Processes). Diese Methoden sind grundsätzlich gut geeignet, um Manganionen und Eisenionen an einer geeigneten Stelle im Wasserkreislauf zweistufig zu entfernen, wobei zuerst Eisen(III)- und Mangan(IV)-Oxide gebildet werden, die nach Stand der Technik anschließend abfiltriert werden. Nachteilig an diesen Verfahren ist der Umstand, dass die biologische Oxidation instabil sein kann und eine lange Anlaufzeit benötigt. Dadurch ist ein intermittierender Betrieb, wie das in der Regel bei Notfallanlagen der Fall ist, nicht möglich. Außerdem ist eine pH-Wert Einstellung > pH 8 notwendig, was einen zusätzlichen Verbrauch an chemischen Betriebsmitteln erfordert. Chemische Oxidationsmittel führen immer zu einem zusätzlichen Eintrag von Fremdstoffen ins Trinkwasser und führen in der Regel auch zu erhöhten Betriebskosten.

Die Oxidation mit Ozon oder mittels AOP kann zu unerwünschten Nebenreaktionen führen, welche sich ebenfalls negativ auf die Wasserqualität auswirken können. Insbesondere führt das Vorhandensein von Bromiden im Wasser dazu, dass sich Bromate bilden. Bromate sind Kanzerogene, weshalb deren Bildung unerwünscht ist. Da Bromide in den meisten natürlichen Wasserressourcen vorhanden sind, stellt die Aufbereitung von bromidhaltigem Wasser - insbesondere durch Oxidation mit Ozon - eine große Herausforderung dar: Es muss eine Balance zwischen ausreichender Oxidation von Eisen- und Manganionen auf der einen Seite und nicht überschießender Oxidation von Bromiden zu Bromaten auf der anderen Seite erreicht werden. In der Praxis wird daher - zur Einhaltung von Grenzwerten an Bromaten z.B. in Trinkwasser - ein Kompromiss zu Lasten der Eisen- und Manganoxidation eingegangen und die Verschlechterung der Leitungs- und Wasserqualität in Kauf genommen.

### KURZE BESCHREIBUNG DER ERFINDUNG

Ausgehend von den Nachteilen dieses oben beschriebenen Kompromisses, der eine nicht ausreichende Oxidation von Eisen- und Manganionen zur Vermeidung der Bildung unerwünschter Nebenprodukte wie Bromaten zur Folge hat, ist es daher Aufgabe der vorliegenden Erfindung, diese aus dem Stand der Technik bekannten Nachteile zu vermeiden. Insbesondere soll eine möglichst vollständige Oxidation von Eisen- und Manganionen gewährleistet werden, ohne dass es zu einer unerwünschten Bildung von Nebenprodukten wie Bromaten kommt.

Gelöst wird diese Aufgabe durch ein Verfahren zum Entfernen von Eisen(II) und/oder Mangan(II) aus mit Eisen(II) und/oder Mangan(II) verunreinigtem Wasser, wobei Eisen(II) zu Eisen(III)-oxid und Mangan(II) zu Mangan(IV)-oxid oxidiert werden, wobei anschließend Eisen(III)-oxid und/oder Mangan(IV)-oxid entfernt werden, dadurch gekennzeichnet, dass zur Oxidation von Eisen(II) zu Eisen(III)-oxid und Mangan(II) zu Mangan(IV)-oxid in das mit Eisen(II) und/oder Mangan(II) verunreinigte Wasser nicht-thermisches Plasma (NTP) eingeleitet wird.

Im Rahmen der Erfindung wird unter dem Begriff "mit Eisen(II) und/oder Mangan(II) verunreinigtes Wasser" jegliche Wasserquelle verstanden, in der sich Eisen(II) und/oder Mangan(II) befindet, insbesondere Trinkwasser, Leitungswasser, Brauchwasser jeder Art, Grundwasser oder z.B. vorgereinigtes Wasser aus einer Kläranlage. Insbesondere eignet sich das Verfahren, wenn die Grenzwerte im verunreinigten Wasser bei > 0,2 mg·L⁻¹ Eisen und > 0,05 mg·L⁻¹ Mangan liegen, da das Verfahren geeignet ist, die Indikatorparameterwerte laut Trinkwasserverordnung (TWV 304/2001) für Eisen von ≤ 0,2 mg·L⁻¹ und für Mangan von ≤ 0,05 mg·L⁻¹ zu erreichen.

Im Vergleich zu Oxidationsverfahren nach Stand der Technik ist der Einsatz von NTP mit geringeren Betriebskosten verbunden und es kommt zu keinem Eintrag von Fremdstoffen oder von unerwünschten Nebenprodukten. Insbesondere werden bei diesem Verfahren keine Bromate gebildet, wenn das mit Eisen(II) und/oder Mangan(II) verunreinigte Wasser außerdem mit Bromid verunreinigt ist. Auch weist das Verfahren den Vorteil auf, dass keine zusätzlichen chemischen Betriebsmittel erforderlich sind. Trotzdem ist eine vollständige Oxidation von Eisen- und Manganionen gewährleistet.

Beim erfindungsgemäßen Verfahren ist vorgesehen, dass das NTP durch eine Vorrichtung zur Erzeugung von NTP erzeugt wird, wobei das erzeugte NTP in das mit Eisen(II) und/oder Mangan(II) verunreinigte Wasser direkt eingeleitet wird. Hierfür kann z.B. die Vorrichtung zur Erzeugung von NTP das NTP direkt in einen Tank einleiten, in welchem sich das mit Eisen(II) und/oder Mangan(II) verunreinigte Wasser befindet. Die Vorrichtung zur Erzeugung von NTP kann auch direkt im Tank sein und das NTP direkt im Tank abgeben. Die Vorrichtung zur Erzeugung von Nicht-thermisches Plasma weist eine Gasversorgungseinheit auf, die die Vorrichtung mit Gas versorgt. Bevorzugt ist als Gas Luft vorgesehen, bei Umgebungstemperatur, vorzugsweise 20 bis 30 °C. Die Luft weist bevorzugt eine Luftfeuchtigkeit von 50 bis 100% r.h., um die NTP-Bildung zu begünstigen.

Die Erzeugungsvorrichtung für NTP kann das NTP kontinuierlich oder diskontinuierlich erzeugen, was es ermöglicht, das erfindungsgemäße Verfahren kontinuierlich oder diskontinuierlich zu betreiben. Ein diskontinuierlicher Betrieb ist bei verbreiteten Anlagen mit biologischer Oxidation nicht möglich. Eine Ausführungsvariante der Erfindung sieht daher die diskontinuierliche Einleitung von NTP in das mit Eisen(II) und/oder Mangan(II) verunreinigte Wasser vor. Diese Variante ist vorteilhaft, wenn das mit Eisen(II) und/oder Mangan(II) verunreinigte Wasser dem Verfahren in einem Tank unterzogen wird.

Eine Ausführungsvariante der Erfindung sieht eine kontinuierliche Einleitung von NTP in das mit Eisen(II) und/oder Mangan(II) verunreinigte Wasser vor. Diese Variante ist vorteilhaft, wenn das Verfahren an fließendem, mit Eisen(II) und/oder Mangan(II) verunreinigten Wasser unterzogen wird.

Bei Nicht-thermischem Plasma (NTP) - auch als Nichtgleichgewichtsplasma bezeichnet - handelt es sich um ein Plasma, das sich nicht im thermischen Gleichgewicht befindet. Daher sind die Temperaturen der im Plasma enthaltenen Teilchensorten (Neutralteilchen, Ionen, Elektronen) signifikant unterschiedlich. In der Regel ist die Elektronentemperatur wesentlich höher ist als die Temperatur der schweren Teilchen (Ionen und Neutralteilchen). Dies ermöglicht es, dass das Plasma bei Temperaturen erzeugt wird, die im Bereich von Raumtemperatur (25 °C) liegen.

Nicht-thermisches Plasma kann auszugsweise durch eine Dielektrische Barrierenentladung (DBD), Mikrowellenstrahlung, Koronaentladung oder Gleitentladung erzeugt werden.

Im vorliegenden Fall ist bevorzugt vorgesehen, dass das NTP durch dielektrische Barrierenentladung (DBD) hergestellt wird. Dieses kann feinblasig in das mit Eisen(II) und/oder Mangan(II) verunreinigte Wasser eingebracht wird. Dies führt dazu, dass hauptsächlich negativ geladene Sauerstoffradikale im Wasser gebildet werden. Es handelt sich dabei um hochreaktive Ionen, die mittels Clusterbildung stabilisiert werden. Die Clusterbildung führt dazu, dass die Lebensspanne der Radikale lang genug ist, um in der Vorrichtung, in welcher die Oxidation durchgeführt wird, die Reaktion der Mn-Ionen und Fe-Ionen zu gewährleisten.

Im Vergleich zu einer Ozonröhre unterscheidet sich das erfindungsgemäß eingesetzte NTP durch eine Unterdrückung der Ozonkonzentration in dem zu behandelnden Gas (bevorzugt Umgebungsluft). Um die Ozonkonzentration besonders niedrig zu halten, ist es vorteilhaft, wenn das NTP außerhalb des Frequenzbereichs zwischen 500 und 2.000 Hz betrieben wird. Die Ozonkonzentration des bevorzugten NTP überschreitet dabei nicht 0,005 mg/l im verunreinigten Wasser. Bei höheren Konzentrationen besteht die Gefahr einer unerwünschten Bildung von Nebenprodukten wie beispielsweise Bromaten.

Es wurde überaschenderweise festgestellt, dass eine Reaktion von Fe²⁺ und / oder Mn²⁺ zu Fe₂O₃ und / oder MnO₂ besonders effizient bei einem Leistungseintrag von 1 Watt/m³ Umgebungsluft / Stunde [W/L/m³ Umgebungsluft] bis 8 W/L/m³ Umgebungsluft]. Steigt der Wert über 8 W/L/m³ Umgebungsluft ist mit erhöhten Konzentrationen von Reaktiven Stickstoffspezies (RNS) auszugehen. Dieser unerwünschte Eintrag von zu hohen RNS Konzentrationen kann beispielsweise durch eine Absenkung des pH-Wertes und durch Erhöhung vom Gesamtstickstoff im zu behandelndem Wasser festgestellt werden.

Bevorzugt wird deshalb eine Plasmaleistung von 1 W/L/m³ Umgebungsluft bis 7 W/L/m³ Umgebungsluft, besonders bevorzugt zwischen 2 W/L/m³ Umgebungsluft und 8 W/L/m³ Umgebungsluft eingestellt.

In einer Ausführungsvariante ist vorgesehen, dass das NTP durch dielektrische Barrierenentladung mittels einer Vorrichtung zur Erzeugung von Nicht-thermischem Plasma erfolgt, wobei die Vorrichtung zur Erzeugung von Nicht-thermischem Plasma das Plasma aus Luft erzeugt, wobei die Vorrichtung zur Erzeugung von Nicht-thermischem Plasma eine Wechselspannung mit einer Spannung zwischen 2500 V und 5000 V aufweist und wobei die Frequenz des Wechselstroms zwischen 200 Hz und 500 Hz aufweist, wobei die Stromstärke zwischen 5 mA und 15 mA beträgt.

Bevorzugt beträgt der Energieeintrag der dielektrischen Barrierenentladung in das verunreinigte Wasser weniger als 150 Joule pro Liter (J/L), vorzugsweise weniger als 40 J/L.

In diesem Bereich werden bevorzugt Reaktive Sauerstoffspezies (ROS) gebildet. ROS sind eine Gruppe von Sauerstoffmolekülen und -ionen, die reaktiv sind und in der Lage sind, mit anderen Molekülen in chemischen Reaktionen zu interagieren. Zu den ROS gehören unter anderem Superoxidradikale (O₂•-), Hydroxylradikale (-OH), Singulett-Sauerstoff (¹O₂) und Wasserstoffperoxid (H₂O₂)).

Überraschenderweise wurde auch festgestellt, dass eine Reaktion von Fe²⁺ und / oder Mn²⁺ zu Fe₂O₃ und / oder MnO₂ besonders effizient bei einem Leistungseintrag von 0,003 W/cm² bis 0,1 W/cm² der verwendeten Gitterelektrode des NTP verwendet wird. In diesem Bereich wird eine unerwünschte Ozon- und RNS-Konzentration unterdrückt und die Bildung von ROS, insbesondere das Superoxidradikal Anion, gefördert.

Zum Zweck der Oxidation werden hauptsächlich negativ geladene Sauerstoffionen im Verfahren angewendet. Die im Wasser hauptsächlich gebildeten Zusammensetzungen sind Superoxid-Radikalanionen (in einem angeregten Zustand), die sich zu Sauerstoff-Radikalanionen dissoziieren: 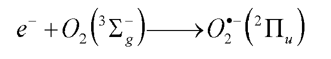 und

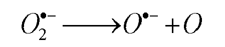

Aufgrund des sehr hohen Oxidationspotentials (2,85 V und höher) gegenüber Ozon können diese Radikale Mn²⁺ und Fe²⁺ oxidieren. Der Anteil dieser Radikale ist im nichtthermischen Plasma deutlich höher als bei Ozon. Ein höherer Oxidationszustand führt zu höherer Fällungsleistung. Dadurch können größere Flocken mit höherer Fällungsgeschwindigkeit gebildet werden. Aufgrund dessen kann das erfindungsgemäße Verfahren zur Entfernung von Eisen und Mangan ohne zusätzliche Chemikalien verwendet werden.

Weiters hat, wie in der Literatur vielfach beschrieben, die Oxidation mittels Ozon den Nachteil, dass die Bromatbildung aus Bromiden nicht hintangehalten oder unterdrückt werden kann. Umgekehrt gilt als gesichert, dass wegen des geringen Ozongehaltes eines nichtthermischen Plasmas, insbesondere jenes, welches erfindungsgemäß aus feuchter atmosphärischer Luft erzeugt wird, gegenüber reinem Ozon das Bromatbildungspotential von vornherein niedriger ist.

Die gebildeten Sauerstoffradikale können durch eine eingetauchte Turbine oder ein insbesondere feinblasiges Diffusersystem in das Wasser eingebracht werden. Für die Herstellung von NTP kann ohne weitere Vorbehandlung reine Umgebungsluft verwendet werden.

Die anschließende Entfernung von Eisen(III)-oxid und/oder Mangan(IV)-oxid kann durch z.B. durch ein Filtrationsverfahren und/oder ein Sedimentationsverfahren jeweils mit oder ohne Flockungshilfsmittel erfolgen. Bevorzugt ist ein Filtrationsverfahren, besonders bevorzugt ein Ultrafiltrationsverfahren vorgesehen.

Bei Ultrafiltrationsverfahren handelt es sich um ein Filtrationsverfahren aus dem Bereich der Membrantechnik, mit dem sich makromolekulare Substanzen und kleine Partikel aus einem Medium abtrennen und konzentrieren lassen. Das Grundprinzip der Filtration ist die Verwendung von organischen Hohlfasermembranen mit Mikroporen als Filtrationsmedium. Daher ist der Druckverlust außergewöhnlich niedrig und das System kann auch mit Hilfe der Schwerkraft ohne zusätzliche Pumpen betrieben werden.

Im Falle des Abfiltrierens durch Ultrafiltration ist eine Trenngrenze bei 10 - 100 nm bevorzugt.

Die Aufgabe wird außerdem gelöst durch eine Vorrichtung, wobei die Vorrichtung umfasst:
- einen Reaktionsstank,
- einen Filtrationstank, welcher mit dem Reaktionstank über eine fluidleitende Verbindung verbunden ist,
- einen Permeattank, welcher mit dem Filtrationstank fluidleitend verbunden ist,
- eine Vorrichtung zur Erzeugung von Nicht-thermischem Plasma (NTP), welche im Reaktionstank angeordnet ist,
wobei der Reaktionstank eine Zuleitung von einer Wasserquelle aufweist.

Eine solche Vorrichtung ist insbesondere zur Durchführung des Verfahrens gedacht.

Bevorzugt ist vorgesehen, dass im Filtrationstank eine Filtrationseinheit angeordnet ist. Ein zusätzlicher Filtrationstank verringert das Risiko, dass sich bereits abgefilterte Niederschläge wieder in das Filtrat absetzen.

Zur besseren Beförderung zwischen den einzelnen Tanks kann in der fluidleitenden Verbindung zwischen Filtrationstank und Permeattank eine Pumpeinrichtung angeordnet sein.

In einer Ausführungsvariante ist vorgesehen, dass die in der Zuleitung eine Pumpe angeordnet ist. Damit kann die zu reinigende Menge an Wasser besser kontrolliert werden.

Bevorzugt ist vorgesehen, dass der Permeattank einen Auslass aufweist. Dieser kann zur Entnahme von Filtrat verwendet werden.

Die Vorrichtung zur Erzeugung von Nicht-thermisches Plasma (NTP) weist bevorzugt eine dielektrische Barrierenentladungsvorrichtung (DBD) auf. Dazu umfasst die Vorrichtung zur Erzeugung von NTP zwei Elektroden, zwischen denen eine elektrische Spannung anlegbar ist.

Zwischen den Elektroden ist ein Dielektrikum vorhanden, um die dielektrische Barriereentladung zu erzeugen, durch die das Plasma entsteht. Das Dielektrikum kann auch dazu dienen, die Entladung zu stabilisieren und die Energieeffizienz zu erhöhen.

Weiters weist die Vorrichtung zur Erzeugung von NTP eine Gasversorgungseinheit auf. Aus dem Gas der Gasversorgungseinheit wird das Plasma erzeugt. Bevorzugt kommt Luft als Gas zum Einsatz. Eine Vorrichtung zur Erzeugung von NTP ist durch eine Stromquelle betreibbar. Die Erzeugung des NTP erfolgt durch Anlegen einer Spannung, die stark genug ist, um das neutrale Gas zu ionisieren und so das Plasma zu erzeugen.

Das elektrische Feld beschleunigt die Elektronen, die mit den Gasatomen oder Gasmolekülen kollidieren. Bei diesen Kollisionen werden weitere Elektronen freigesetzt (Ionisation) und es entstehen angeregte Zustände sowie freie Radikale, wie oben beschrieben. Aufgrund der Massenunterschiede erwärmen sich die Elektronen viel stärker und schneller als die schweren Teilchen, was zu einem nichtthermischen Plasmazustand führt, bei dem das Gas kühl bleibt.

Die Vorrichtung zur Erzeugung von NTP ist bevorzugt derart ausgebildet, dass sie bei einer Plasmaleistung von 1 W/L/m³ Umgebungsluft bis 7 W/L/m³ Umgebungsluft, besonders bevorzugt zwischen 2 W/L/m³ Umgebungsluft und 8 W/L/m³ Umgebungsluft betreibbar ist.

Die Vorrichtung zur Erzeugung von NTP ist besonders bevorzugt derart ausgebildet, dass ein Leistungseintrag von 0,003 W/cm² bis 0,1 W/cm² möglich ist.

### DETAILLIERTE BESCHREIBUNG DER ERFINDUNG

Weitere Vorteile und Details der Erfindung werden nachfolgend anhand von Beispielen und den Figuren samt Figurenbeschreibung erläutert.
- Fig. 1: zeigt eine erfindungsgemäße Vorrichtung.
- Fig. 2 bis 5: zeigt die Effizienz des Verfahrens in der Entfernung von Eisen (strichliert) und Mangan (durchgezogene Linie) bei einer Kontaktzeit von Wasser mit NTP von 15 Minuten (Fig. 2), 20 Minuten (Fig. 3), 25 Minuten (Fig. 4) und 30 Minuten (Fig. 5).

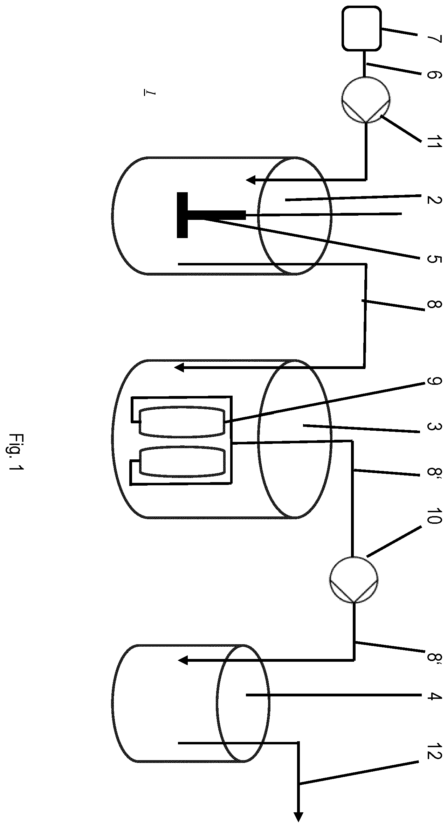

Fig. 1 zeigt eine erfindungsgemäße Vorrichtung 1 zur Durchführung eines erfindungsgemäßen Verfahrens. Die Vorrichtung 1 umfasst einen Reaktionstank 2 und einen Permeattank 4, welcher mit dem Reaktionstank 2 über eine fluidleitende Verbindung 8 verbunden ist. Eine Vorrichtung zur Erzeugung von NTP 5 ist im Reaktionstank 2 angeordnet. Der Reaktionstank 2 weist eine Zuleitung 6 von Wasser aus einer nicht näher spezifizierten Wasserquelle 7 auf. In der fluidleitenden Verbindung 8, 8` ist zwischen Reaktionstank 2 und Permeattank 4 ein Filtrationstank 3, in dem sich eine Filtrationseinheit 9 befindet, angeordnet. Der Permeattank 4 hat einen Auslass 12 zur Entnahme des filtrierten Wassers.

Die fluidleitenden Verbindungen 8, 8` verbinden den Reaktionstank 2 mit dem Filtrationstank 3 und den Filtrationstank 3 mit dem Permeattank 4, sodass ein Fluss des Wassers vom Reaktionstank 2 über den Filtrationstank 3 und von dort in den Permeattank 4 möglich ist. Die Filtrationseinheit 9 ist im Filtrationstank 3 so angeordnet, dass über den ersten Leitungsabschnitt 8 der fluidleitenden Verbindung die Zufuhr des mit NTP behandelten Wassers aus dem Reaktionstank 2 erfolgt. Dieses behandelte Wasser umfasst Fe₂O₃ und MnO₂. Nach der Abfiltration in der Filtrationseinheit 9 erfolgt die Ausleitung des gereinigten Wassers über den zweiten Leitungsabschnitt 8` in den Permeattank 4.

Im zweiten Abschnitt der fluidleitenden Verbindung 8`, d.h. zwischen Filtrationstank 3 und Permeattank 4, ist eine Pumpeinrichtung 10 angeordnet. Die Pumpeinrichtung 10 ermöglicht den Transport von Wasser aus dem Filtrationstank 3 in den Permeattank 4. Weiters kann in der Zuleitung 6 eine Pumpe 11 angeordnet sein, um den Reaktionstank 2 zu befüllen.

Das Verfahren zum Entfernen von Eisen(II) und/oder Mangan(II) aus mit Eisen(II) und/oder Mangan(II) verunreinigtem Wasser, wobei Eisen(II) zu Eisen(III)-oxid und Mangan(II) zu Mangan(IV)-oxid oxidiert werden, wobei anschließend Eisen(III)-oxid und/oder Mangan(IV)-oxid abfiltriert werden, sieht vor, dass die Oxidation von Eisen(II) zu Eisen(III)-oxid und Mangan(II) zu Mangan(IV)-oxid so erfolgt, dass in das mit Eisen(II) und/oder Mangan(II) verunreinigte Wasser nicht-thermisches Plasma (NTP) eingeleitet wird. Das mit Eisen(II) und/oder Mangan(II) verunreinigte Wasser wird zunächst in den Reaktionstank 2 gebracht, wo die Einleitung des NTP über die Vorrichtung zur Erzeugung von NTP 5 erfolgt. Im Reaktionstank 2 erfolgen die Oxidation von Fe²⁺ und / oder Mn²⁺ zu Fe₂O₃ und / oder MnO₂.

Weiters ist zur Hintanhaltung oder Unterdrückung einer Bromatbildung aus eventuell im Wasser vorhandenen Bromiden das NTP derart, dass es einen niedrigen Gehalt an Ozon und im Gegenzug einen hohen Gehalt an Superoxid-Radikalanionen aufweist. Dies gelingt über die Bildung eines NTP, welches durch Hochspannungsentladung mit dielektrischer Barriere entsteht und welches unmittelbar und bevorzugt Eisen und Mangan, nicht aber Bromide, oxidiert.

Nach erfolgter Oxidation im Reaktionstank 2 wird das mit den Reaktionsprodukten Fe₂O₃ und / oder MnO₂ angereicherte Wasser in den Filtrationstank 3 befördert und durch die Filtrationseinheit 9 gereinigt.

Mit dem erfindungsgemäßen Verfahren werden die Reaktionsprodukte Fe₂O₃ und / oder MnO₂ aus dem Wasser über eine geeignete Filtrationseinheit 9 entfernt und es wird das Wasser im Falle des Einsatzes einer Ultrafiltration auch gleichzeitig desinfiziert. Sicherheitsmaßnahmen, wie bei Ozonanlagen, sind bei dieser Anwendung der geschilderten Vorrichtung unter Verwendung eines THP aus Ionisierung von feuchter atmosphärischer Luft mittels dielekrischer Barriereentladung nicht notwendig. Es können durch das NTP aus der gewählten Ionisierungsanlage nur sehr geringe Mengen an Ozon gebildet werden, jedoch müssen für derart geringe Konzentrationen keine Schutzmaßnahmen getroffen werden.

Im einem neu errichteten Trinkwasserbrunnen wurden Eisen- und Mangankonzentrationen nachgewiesen, welche über den gesetzlich festgelegten Indikatorparameterwerten laut Trinkwasserverordnung TWV 304/2001 liegen. Im Rahmen von Versuchen zur Reduktion von Eisen und Mangan unter Anwendung des erfindungsgemäßen Verfahrens erfolgte die Entfernung von Mangan und Eisen aus dem Trinkwasserbrunnen bis unter den gesetzlich vorgeschriebenen Indikatorparameterwert.

| Versuchsparameter | | |
|---|---|---|
| Rohwasserbeschickung | **0,82 - 1,64** | m³/h |
| Volumen Reaktionstank | **410** | L |
| Aufenthaltszeit | **15-30** | min |
| Aufbereitungsmenge Ionisation | **0,82 - 1,64** | m³/h |
| Volumen Filtrationstank | **200** | L |
| Membranfläche | **ca. 24** | mz |
| Aufbereitungsmenge Ultrafiltration | **ca. 0,82 - 1,64** | m³/h |

Stichproben wurden nach dem Reaktionstank 2 und aus dem Permeattank 4 gezogen und ausgewertet.

### Ergebnisse

Untersucht wurden verschiedene Wasserproben, die mit Eisen(II) und Mangan(II) verunreinigt ist, um die Abscheidung von Fe(II) und Mn(II) zu demonstrieren.

Ausgehend von typischen Wasserproben mit Konzentrationen von 0,10 mg/L bis 0,16 mg/L Fe²⁺ und 0,30 bis 0,40 mg/L Mn²⁺ wurden Behandlungszeiten von 15 bis 30 min untersucht. Die Werte in Tabelle 1 zeigen, dass unabhängig von den Ausgangswerten an Fe²⁺ (0,10 mg/L bis 0,16 mg/L) und Mn²⁺ (0,30 bis 0,40 mg/L) stets bereits nach einer kurzen Behandlungsdauer (15, 20, 25 und 30 Minuten) eine Reduktion von Fe²⁺ auf unterhalb der Trinkwasserverordnungs-Indikatorgrenzen von 0,05 mg/L an Fe²⁺ und bei Mn²⁺ auf unter 0,05 mg/L Mn²⁺ erzielt. Der Gesamtgehalt an Fe und Mn blieb konstant, was belegt, dass Mn²⁺ und Fe²⁺ quantitativ in höhere Oxidationsstufen überführt wurden, wobei diese als Eisen(III)-oxid und Mangan(IV)-oxid nachweisbar waren.

**Tabelle 1: Messwerte an Eisen(II), Gesamteisen, Mangan(II) und Gesamtmangan in verunreinigtem Wasser an mehreren Messtagen vor Anwendung des Verfahrens.**

| Fe²⁺ [mg/L] | Mn²⁺ [mg/L] |
|---|---|
| 0,10 bis 0,16 | 0,30 bis 0,40 |

**Tabelle 2: Messwerte an Eisen(II), Gesamteisen, Mangan(II) und Gesamtmangan in verunreinigtem Wasser nach Anwendung des Verfahrens.**

| t [min] | Fe ²⁺ [mg/L] | Fe-Gesamt [mg/L] | Mn²⁺ [mg/L] | Mn-Gesamt [mg/L] |
|---|---|---|---|---|
| 15 | <0,05 | konstant | <0,05 | konstant |
| 20 | <0,05 | konstant | <0,05* | konstant |
| 25 | <0,05 | konstant | <0,05 | konstant |
| 30 | <0,05 | konstant | <0,05 | konstant |

| | | | | |
|---|---|---|---|---|
| *Werte für Mn²⁺ von 0,01 - 0,0125 mg/L konnten erzielt werden. | | | | |

Versuche unter Anwendung des erfindungsgemäßen Verfahrens in der geschildeten Vorrichtung haben eindeutig gezeigt, dass der Indikatorparameterwert für Mangan der Trinkwasserverordnung bei jeder der gewählten Aufenthaltszeit von 15-30 Minuten signifikant unterschritten wird. Der Indikatorparameterwert für Eisen wird bei jeder Aufenthaltszeit deutlich unterschritten.

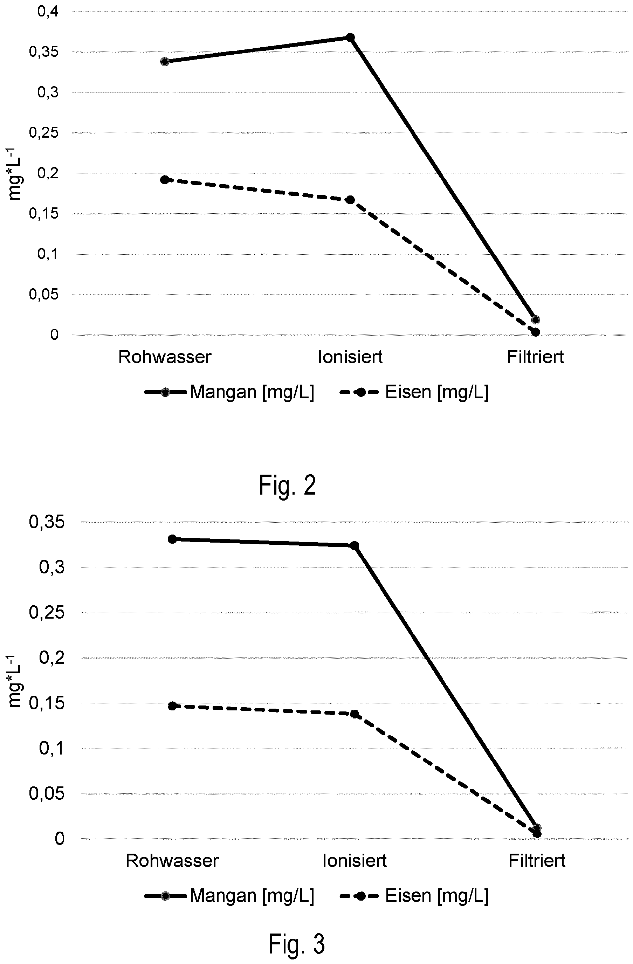

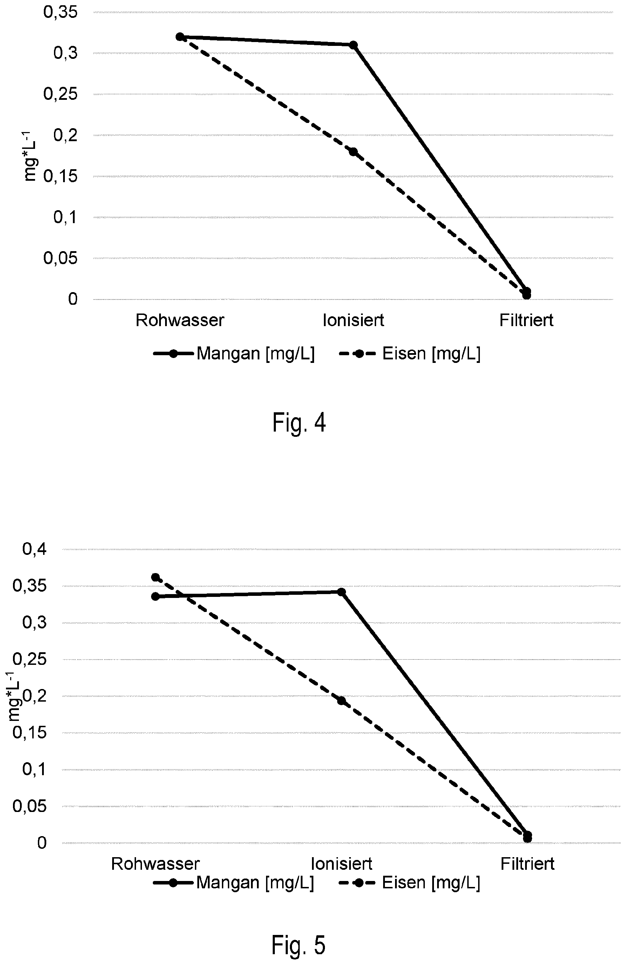

In den Fig. 2 bis 5 ist die Effizienz des Verfahrens hinsichtlich der Entfernung von Eisen (strichliert) und Mangan (durchgezogene Linie) bei einer Kontaktzeit von Wasser mit NTP von 15 Minuten (Fig. 2), 20 Minuten (Fig. 3), 25 Minuten (Fig. 4) und 30 Minuten (Fig. 5) gezeigt. Die Diagramme zeigen die Gesamtmenge an Mn und Fe im Wasser. Während die Ionisierung allein zu keiner Änderung der Gesamtmenge im Wasser führt, da ja nur ein Oxidationsschritt aber noch keine Entfernung zum Beispiel durch Filtration stattgefunden hat, zeigt sich nach Filtration eine fast quantitative Entfernung aus der Lösung. Vergleichsexperimente ohne Ionisationsschritt und nur mit Filtration (nicht gezeigt) ergaben keine Verringerung der Gesamtmenge an Fe oder Mn wenn nur Fe(II) oder Mn(II) vorlag.

Weiters konnte nachgewiesen werden, dass keine Bromate auch bei hohen Konzentrationen von Bromid im Rohwasser gebildet wurden, wenn ein NTP verwendet wird.

Die Untersuchungen zeigen das bei der Behandlung eines bromidhältigen Rohwassers mit NTP ebenso wie bei der Behandlung mit Ozon mit eine Bromatbildung zu rechnen ist, Versuchsparameter:
Behandlungszeit mit NTP: 15 Minuten
Eisen(II) Konzentration: 600 µg/l
Mangan(II) Konzentration: 300 µg/l
DOC Konzentration: 2,5 mg/l
Variation der Bromid-Konzentration: 500 µg/L, 1000 µg/L, 1500 µg/L

Die Ergebnisse der Bromid- und Bromatkonzentrationen sind in Tabelle 3 zusammengefasst.

**Tabelle 3**

| Br⁻ [µg/L] vor Behandlung | Bromat [µg/L] nach Behandlung |
|---|---|
| 500 | <5 |
| 1000 | < 5 |
| 1500 | <5 |

Auch nach der Behandlung mit dem Plasma konnte bei keiner der untersuchten Bromidkonzentrationen Bromat im behandelten Wasser nachgewiesen werden.

Zusammenfassend kann festgehalten werden, dass bei der Behandlung mit NTP keine Bromatbildung aus bromidhältigen Rohwässern nachgewiesen werden konnte. Die bekannten Probleme der Ozonbehandlung von bromidhaltigen Rohwässern könnten somit durch die Behandlung mit NTP umgangen werden. Die im Trinkwasser vorgefundenen Mangan- und Eisenverbindungen können unter Anwendung des Verfahrens in der geschildeten Vorrichtung nach einer NTP-Behandlungszeit von nur 15 Minuten im Durchlaufversuch unter den Indikatorparameterwert von 0,05 mg/L für Mn²⁺ bzw. 0,2 mg/L für Fe²⁺ reduziert werden. Bei einer NTP-Belüftungszeit von 20 Minuten wurden Werte für Mn²⁺ von 0,01 - 0,0125 mg/L erreicht. Die vorgegebene Indikatorparameterwert wurde hier mit mehr als ausreichender Sicherheit unterschritten. Weiters ist die Bildung von Bromat hintangehalten und unterdrückt bzw. werden die höchstzulässigen Werte von 0,01 mg Bromat/L sicher und stabil eingehalten.

## Patentansprüche

1. Verfahren zum Entfernen von Eisen(II) und/oder Mangan(II) aus mit Eisen(II) und/oder Mangan(II) verunreinigtem Wasser, wobei Eisen(II) zu Eisen(III)-oxid und Mangan(II) zu Mangan(IV)-oxid oxidiert werden, wobei anschließend Eisen(III)-oxid und/oder Mangan(IV)-oxid entfernt werden, **dadurch gekennzeichnet, dass** zur Oxidation von Eisen(II) zu Eisen(III)-oxid und Mangan(II) zu Mangan(IV)-oxid in das mit Eisen(II) und/oder Mangan(II) verunreinigte Wasser nicht-thermisches Plasma (NTP) eingeleitet wird.

2. Verfahren nach Anspruch 1, **dadurch gekennzeichnet, dass** das NTP durch dielektrische Barrierenentladung mittels einer Vorrichtung zur Erzeugung von Nicht-thermischem Plasma erfolgt, wobei die Vorrichtung zur Erzeugung von Nicht-thermischem Plasma das Plasma aus Luft erzeugt, wobei die Vorrichtung zur Erzeugung von Nicht-thermischem Plasma eine Wechselspannung mit einer Spannung zwischen 2500 V und 5000 V aufweist und wobei die Frequenz des Wechselstroms zwischen 200 Hz und 500 Hz aufweist, wobei die Stromstärke zwischen 5 mA und 15 mA beträgt.

3. Verfahren nach Anspruch 2, **dadurch gekennzeichnet, dass** der Energieeintrag der dielektrischen Barrierenentladung in das verunreinigte Wasser weniger als 150 Joule pro Liter (J/L), vorzugsweise weniger als 40 J/L beträgt.

4. Verfahren nach einem der Ansprüche 1 bis 3, **dadurch gekennzeichnet, dass** das Entfernen von Eisen(III)-oxid und/oder Mangan(IV)-oxid ein Filtration umfasst, vorzugweise eine Ultrafiltration.

5. Verfahren nach einem der Ansprüche 1 bis 4, **dadurch gekennzeichnet, dass** das NTP einen Ozongehalt von weniger als 15 Volumenprozent aufweist.

6. Verfahren nach einem der Ansprüche 1 bis 5, **dadurch gekennzeichnet, dass** die Oxidation von Eisen(II) zu Eisen(III)-oxid und Mangan(II) zu Mangan(IV)-oxid in einem Reaktionstank (2) durchgeführt wird, wobei das mit Eisen(II) und/oder Mangan(II) verunreinigte Wasser im Reaktionstank (2) eine hydraulische Aufenthaltszeit von 10 Minuten bis 60 Minuten aufweist.

7. Verfahren nach einem der Ansprüche 1 bis 6, **dadurch gekennzeichnet, dass** das mit Eisen(II) und/oder Mangan(II) verunreinigte Wasser außerdem Bromid enthält.

8. Verfahren nach Anspruch 7, **dadurch gekennzeichnet, dass** weniger als 5 µg/L Bromat gebildet werden.

9. Vorrichtung (1) zur Durchführung eines Verfahrens nach einem der Ansprüche 1 bis8, wobei die Vorrichtung (1) umfasst:
• einen Reaktionstank (2),
• einen Filtrationstank (3), welcher mit dem Reaktionstank (2) über eine fluidleitende Verbindung (8) verbunden ist,
• einen Permeattank (4), welcher mit dem Filtrationstank (3) über eine fluidleitende Verbindung (8`) verbunden ist,
• eine Vorrichtung zur Erzeugung von Nicht-thermischem Plasma (5), welche im Reaktionstank (2) angeordnet ist,
wobei der Reaktionstank (2) eine Zuleitung (6) von einer Wasserquelle (7) aufweist,
wobei in der fluidleitenden Verbindung (8, 8`) zwischen Reaktionstank (2) und Permeattank (4) eine Filtrationseinheit (9) angeordnet ist.

10. Vorrichtung nach Anspruch 9, **dadurch gekennzeichnet, dass** im Filtrationstank (3) eine Filtrationseinheit (9) angeordnet ist

11. Vorrichtung nach Anspruch 10, **dadurch gekennzeichnet, dass** die Filtrationseinheit (9) eine Ultrafiltrationsmembran aufweist.

12. Vorrichtung nach einem der Ansprüche 9 bis 11, **dadurch gekennzeichnet, dass** in der fluidleitenden Verbindung (8, 8`) zwischen Filtrationstank (3) und Permeattank (4) eine Pumpeinrichtung (10) angeordnet ist.

13. Vorrichtung nach einem der Ansprüche 9 bis 12, **dadurch gekennzeichnet, dass** in der Zuleitung (6) eine Pumpe (11) angeordnet ist.

14. Vorrichtung nach einem der Ansprüche 9 bis 13, **dadurch gekennzeichnet, dass** der Permeattank (4) einen Auslass (12) aufweist.

## Geänderte Patentansprüche

### Geänderte Patentansprüche gemäss Regel 137(2) EPÜ.

1. Verfahren zum Entfernen von Eisen(II) und/oder Mangan(II) aus mit Eisen(II) und/oder Mangan(II) verunreinigtem Wasser, wobei Eisen(II) zu Eisen(III)-oxid und Mangan(II) zu Mangan(IV)-oxid oxidiert werden, wobei anschließend Eisen(III)-oxid und/oder Mangan(IV)-oxid entfernt werden, **dadurch gekennzeichnet, dass** zur Oxidation von Eisen(II) zu Eisen(III)-oxid und Mangan(II) zu Mangan(IV)-oxid in das mit Eisen(II) und/oder Mangan(II) verunreinigte Wasser nicht-thermisches Plasma (NTP) eingeleitet wird,
wobei das NTP durch dielektrische Barrierenentladung mittels einer Vorrichtung zur Erzeugung von Nicht-thermischem Plasma erfolgt, wobei die Vorrichtung zur Erzeugung von Nicht-thermischem Plasma das Plasma aus Luft erzeugt, wobei die Vorrichtung zur Erzeugung von Nicht-thermischem Plasma eine Wechselspannung mit einer Spannung zwischen 2500 V und 5000 V aufweist und wobei die Frequenz des Wechselstroms zwischen 200 Hz und 500 Hz aufweist, wobei die Stromstärke zwischen 5 mA und 15 mA beträgt.

2. Verfahren nach Anspruch 1, **dadurch gekennzeichnet, dass** der Energieeintrag der dielektrischen Barrierenentladung in das verunreinigte Wasser weniger als 150 Joule pro Liter (J/L), vorzugsweise weniger als 40 J/L beträgt.

3. Verfahren nach einem der Ansprüche 1 oder 2, **dadurch gekennzeichnet, dass** das Entfernen von Eisen(III)-oxid und/oder Mangan(IV)-oxid ein Filtration umfasst, vorzugweise eine Ultrafiltration.

4. Verfahren nach einem der Ansprüche 1 bis 3, **dadurch gekennzeichnet, dass** das NTP einen Ozongehalt von weniger als 15 Volumenprozent aufweist.

5. Verfahren nach einem der Ansprüche 1 bis 4, **dadurch gekennzeichnet, dass** die Oxidation von Eisen(II) zu Eisen(III)-oxid und Mangan(II) zu Mangan(IV)-oxid in einem Reaktionstank (2) durchgeführt wird, wobei das mit Eisen(11) und/oder Mangan(II) verunreinigte Wasser im Reaktionstank (2) eine hydraulische Aufenthaltszeit von 10 Minuten bis 60 Minuten aufweist.

6. Verfahren nach einem der Ansprüche 1 bis 5, **dadurch gekennzeichnet, dass** das mit Eisen(II) und/oder Mangan(II) verunreinigte Wasser außerdem Bromid enthält.

7. Verfahren nach Anspruch 6, **dadurch gekennzeichnet, dass** weniger als 5 µg/L Bromat gebildet werden.

8. Vorrichtung (1) zur Durchführung eines Verfahrens nach einem der Ansprüche 1 bis 7, wobei die Vorrichtung (1) umfasst:
• einen Reaktionstank (2),
• einen Filtrationstank (3), welcher mit dem Reaktionstank (2) über eine fluidleitende Verbindung (8) verbunden ist,
• einen Permeattank (4), welcher mit dem Filtrationstank (3) über eine fluidleitende Verbindung (8') verbunden ist,
• eine Vorrichtung zur Erzeugung von Nicht-thermischem Plasma (5), welche im Reaktionstank (2) angeordnet ist,
wobei der Reaktionstank (2) eine Zuleitung (6) von einer Wasserquelle (7) aufweist, wobei in der fluidleitenden Verbindung (8, 8') zwischen Reaktionstank (2) und Permeattank (4) eine Filtrationseinheit (9) angeordnet ist.

9. Vorrichtung nach Anspruch 8, **dadurch gekennzeichnet, dass** im Filtrationstank (3) eine Filtrationseinheit (9) angeordnet ist

10. Vorrichtung nach Anspruch 9, **dadurch gekennzeichnet, dass** die Filtrationseinheit (9) eine Ultrafiltrationsmembran aufweist.

11. Vorrichtung nach einem der Ansprüche 8 bis 10, **dadurch gekennzeichnet, dass** in der fluidleitenden Verbindung (8, 8') zwischen Filtrationstank (3) und Permeattank (4) eine Pumpeinrichtung (10) angeordnet ist.

12. Vorrichtung nach einem der Ansprüche 8 bis 11, **dadurch gekennzeichnet, dass** in der Zuleitung (6) eine Pumpe (11) angeordnet ist.

13. Vorrichtung nach einem der Ansprüche 8 bis 12, **dadurch gekennzeichnet, dass** der Permeattank (4) einen Auslass (12) aufweist.
